# EUROPEAN PATENT SPECIFICATION

(11) **EP 2 476 902 B1**
(45) Date of publication and mention of the grant of the patent: **30.07.2014**
(21) Application number: 11150882.6
(22) Date of filing: 13.01.2011
(51) Int. Cl.: F03G 6/06

(54) **Method and assembly for converting solar radiation in mechanical power**
Verfahren und Anordnung zur Umwandlung von Sonnenstrahlung in mechanische Energie
Procédé et ensemble de conversion de radiation solaire dans une alimentation mécanique

(43) Date of publication of application: 18.07.2012
(73) Proprietor: Sincron S.r.l., 20124 Milano (IT)
(72) Inventor: Russo, Vitaliano, 20135, Milano (IT); Targa, Giorgio, 20147, Milano (IT)
(74) Representative: Ferreccio, Rinaldo

(56) References cited:
- EP-A2- 1 772 687
- WO-A1-2009/094559
- DE-A1-102008 039 191
- FR-A1- 2 908 164
- US-A1- 2008 250 788

## Description

The present invention refers to a method for converting solar radiation in mechanical power, particularly but not exclusively for generation of electrical power, and to an assembly for implementing the method.

As known, the need for obtaining mechanical power from solar rays is strongly felt.

For such purpose assemblies which concentrate the solar rays on boilers, so as to generate vapour at extremely high temperature for actuating a turbine, are known. Such an assembly is known from document EP 1772687 A2 which is the closest prior art and its features known in combination are placed in the preamble of claim 1. Though meeting the object and though generally satisfactory, such assemblies reveal low efficiency, thus the resources dedicated to the investment take a long time to recover.

The problem underlying the present invention is to provide method of the specificied type, having characteristics capable of meeting the aforementioned need, simultaneously overcoming the drawbacks mentioned previously with reference to the prior art.

Such problem is overcome by a method according to claim 1.

Preferred embodiments of the method according to the invention are described in claims 2 and 3.

The present invention also regards an assembly for converting solar radiation in mechanical power according to claim 4.

Preferred embodiments of the assembly according to the invention are described in claims 4-8.

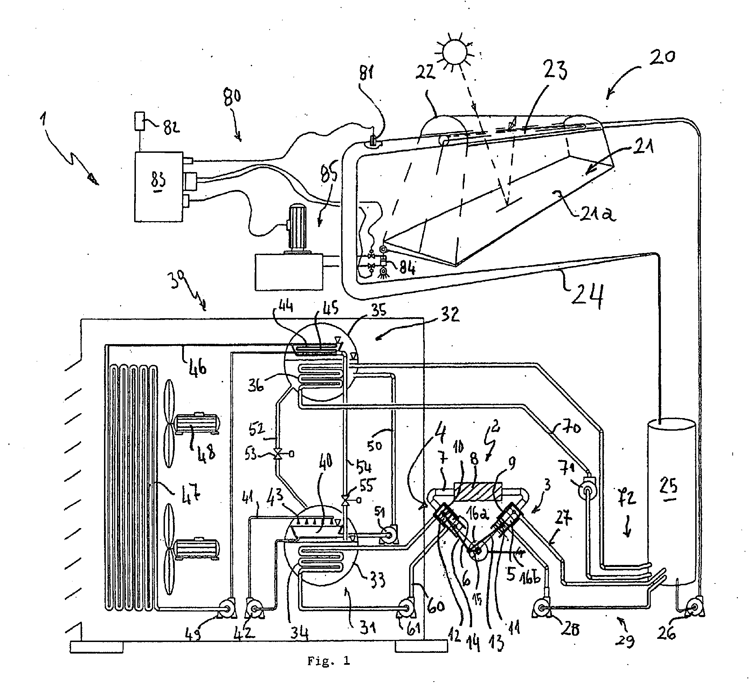

Further characteristics and advantages of the invention shall be apparent from the description of an embodiment thereof, provided solely by way of non-limiting example with reference to the attached drawing, schematically representing an assembly according to the invention.

With reference to the attached drawing, an assembly for converting solar radiation in mechanical power, and for converting the mechanical power obtained in electrical power, according to a preferred but not exclusive embodiment is indicated with 1.

The assembly 1 comprises a per se known Stirling engine 2, including a piston and cylinder unit 3, the so-called hot cylinder, and a piston and cylinder unit 4, the so-called cold cylinder.

The hot cylinder 3 and the cold cylinder 4 comprise respective cylinders 5 and 6, which communicate through a conduit 7 along which a thermal wheel 8, for example a finely divided metal material, is arranged. In the conduit 7 and in the cylinders 5 and 6 a suitable gas, for example helium, is provided.

Respective heat exchangers 9 and 10, passed through by respective fluids, one hot and one cold, for placing said fluids and the gas provided in the respective cylinder in heat exchange relation, are arranged around the cylinders 5 and 6.

Movable in the cylinders 5 and 6 are respective pistons 11 and 12, which actuate - through respective connecting rods 13 and 14 a crankshaft 15, which in turn actuates an electrical generator 16a, for example an alternator, from which an electrical line 16b, for example a three-phase electric line, departs.

With the aim of heating the hot cylinder 3, the assembly 1 comprises a per se conventional solar device 20 for the collection and the concentration of solar rays. In particular, the device 20 comprises a plurality of mirrors arranged in a plane and separately orientable, to constitute a Fresnel linear reflector, indicated with 21, a parabolic mirror 22 and a substantially tubular element 23 arranged along the focus of the parabolic mirror 22, and constituting a heat exchanger.

A fluid circuit 24, in which a fluid circulates, for example a diathermic oil, connects the tubular element 23, along which the fluid is heated, with a storage tank 25, in which the hot fluid is contained at an amount sufficient to guarantee continuous operation even during the night hours. The circulation of the fluid along the circuit 24 is ensured by a pump 26.

A further fluid circuit 27, in which the same fluid circulates, for example the abovementioned diathermic oil, extends between the storage tank 25 and the heat exchanger 9, so as to take the hot fluid to the cylinder 5 of the hot cylinder 3 of the Stirling engine 2. The circulation of the fluid along the circuit 27 is guaranteed by a circulation pump 28.

In practice, the circuit 24 and the circuit 27 constitute - in their entirety - a fluid circuit, generally indicated with 29, which transfers a fluid, heated by the solar radiation, to the hot cylinder of the Stirling engine for heating thereof.

With the aim of cooling the cold cylinder 4, the assembly 1 comprises a per se known absorption refrigeration apparatus 30.

The absorption refrigeration apparatus 30 comprises an absorption stage 31 and a desorption stage 32.

The absorption stage 31 comprises a container 33 in which a liquid ammonia and gaseous ammonia are contained and in which the passage of state of ammonia from liquid to gaseous continuously occurs, with strong cooling. In order to use such cooling, housed in the container 33, embedded in the liquid phase of ammonia, is a heat exchanger 34, which is practically placed in a low temperature environment, about -60°C.

The desorption stage 32 comprises a container 35 which contains water, in which gaseous ammonia is dissolved and in which the gaseous ammonia dissolved in water is continuously discharged, due to an energetic heating. For such purpose, a source of heat and precisely a heat exchanger 36 is housed, immersed in the water.

A nacelle 40 is provided at the roof of the container 33. The nacelle 40 contains water, in which gaseous ammonia is dissolved. A water circuit 41, which draws water from the nacelle 40, by means of a circulation pump 42, and showers it on the nacelle through waterspouts 43, dragging the gaseous ammonia, helps dissolving gaseous ammonia in the water.

A nacelle 44 is provided at the roof of the container 35. The gaseous ammonium discharged from the water is condensed in the nacelle 44. A coil 45, housed within the nacelle, belonging to a fluid circuit 46, for example water, along which a circulation pump 49 is provided, helps such condensations. The circuit 46 is controlled by a radiator 47, which, through fans 48, dissipates the condensation heat of ammonia into the environment.

A conduit 49, with a pump 50, takes the water, and the ammonia dissolved therein, from the nacelle 40 to the container 35, while a conduit 50, with a regulation valve 51, takes the water from the container 35 to the nacelle 40.

A conduit 52, with a regulation valve 53, takes the ammonia condensed by the nacelle 44 to the container 33.

A fluid circuit 60, in which a fluid, for example a low viscosity diathermic oil, circulates, extends between the exchanger 34 and the heat exchanger 10, to take the cold fluid from the heat exchanger 34 to the cylinder 6 of the cold cylinder 4 of the Stirling engine 2.

Advantageously, according to the invention, a fluid circuit 70, of diathermic oil extends between the storage tank 25 and the heat exchanger 36, and it is provided with a circulation pump 71, so as to take the hot fluid to the container 35, to free the water of the ammonia dissolved therein.

In practice, the circuit 24 and the circuit 70 form a fluid circuit 72 which takes the fluid heated by the solar radiation to supply to the desorption stage the heat required for discharging ammonia from the water.

It should be observed that in the previously described absorption refrigeration apparatus 30, water can be replaced by other fluids as the so-called solvent fluid, just like ammonia can be replaced by other fluids as the so-called solute fluid.

According to the invention the assembly 1 comprises a thermostatic circuit 80 associated to the solar device 20, for keeping the maximum temperature of the fluid within a limited preset value, preferably 400 C°. The thermostatic circuit 80 comprises a temperature detector 81, associated to the circuit 24, for detecting the actual temperature of the fluid, a unit 82 for manually setting a desired reference preset temperature, preferably 400 C°, a comparator node 83 for emitting a difference signal between the actual temperature and the set temperature used for controlling an actuator 84 active on the plurality of mirrors for varying orientation thereof up to the elimination of the difference signal.

The assembly 1 implements a method according to the invention for converting solar radiation in mechanical power, particularly for generating electrical power.

The method comprises the steps of providing a Stirling engine 2, a solar device 20 and an absorption refrigeration apparatus 30, feeding a hot fluid heated by the solar device 20 to a hot cylinder 3 of the Stirling engine 2, and feeding to a cold cylinder 4 of the Sterling engine a cold fluid, cooled by an adsorption stage 31 of the refrigeration apparatus 30, obtaining mechanical power from the Stirling engine, particularly for actuating an electrical generator.

The method comprises the step of feeding a hot fluid heated by the solar device to a desorption stage of the absorption refrigeration apparatus.

The method comprises the step of keeping the maximum temperature of the hot fluid heated by the solar device within a limited preset value, preferably 400 °C.

The main advantage of the invention lies in the extraordinarily high efficiency, due to the high difference between the extreme thermodynamic temperatures T1 (400 °C + 273 °C = 673 °K) and T2 (ambient temperature +273 °C). The efficiency of the Stirling engine is also per se high, not only due to the high difference between the temperatures at which the cold fluid (-60°C) and the hot fluid (400 °C) are administered thereto, but also due to the fact that such temperature range comprises temperatures below 0 °C, or in other words that such range is placed nearer to the absolute zero temperature.

A further advantage of the invention lies in the high environmental compatibility, or, in other words, in the low damage caused to the environment in which the assembly is housed, for the low maximum temperatures involved, and hence for a partial and not total local absorption of the solar radiation.

As a further advantage, a long period of operation under safe operating conditions for the maximum temperatures involved contained within values that are compatible with the usually used mechanical construction materials, such as for example steel, should be expected.

Furthermore, the fact that the operation uses fluids, both liquid and gaseous, continuously recycled, i.e. continuously circulating in closed circuits, without requiring a liquid to be progressively supplied to the assembly from outside or even progressively released thereby to the external environment, leads to the further considerable advantages of complete independence of operation and perfect environmental compatibility.

A further advantage lies in the silence, due to the complete absence of separately noisy components in the assembly. Also the Stirling engine is silent given that it is an engine based on the heating and cooling of a flouid which is poured, once hot and once cold, from one cylinder to another, passing through a thermal wheel, alternatingly being heated and cooled therein. For example, the typical noisy combustion of complex internal combustion engines does not occur therein.

A further advantage lies in the operating continuity, as well as in the possibility of prompt intervention, over the entire day and night due to the fact that a storage tank for operating at night is associated to the instantaneous heat exchanger which draws thermal energy from the solar assembly during the day.

Obviously with the aim of meeting specific and contingent needs, a man skilled in the art can make numerous modifications and variants to the previously described method and assembly, all falling within the scope of protection of the invention as described by the following claims.

## Claims

1. Method for converting solar radiation in mechanical power, particularly but not exclusively for generating electrical power, of the type comprising the step of feeding to a hot cylinder of a Stirling engine a hot fluid heated by a solar device, **characterised in that** it comprises the step of feeding to a cold cylinder of the Stirling engine a cold fluid, cooled in the absorption stage of an absorption refrigeration apparatus, obtaining mechanical power from the Stirling engine, particularly but not exclusively for actuating an electrical generator.

2. Method according to claim 1, **characterised in that** it comprises the step of feeding a hot fluide, heated by the solar device, to the desorption stage of the absorption refrigeration apparatus.

3. Method according to claim 1 or 2, **characterised in that** it comprises the step of keeping the maximum temperature of the hot fluid at a low preset value.

4. Assembly (1) for converting solar radiation in mechanical power, particularly but not exclusively for generating electrical power, of the type comprising a Stirling engine (2) having a hot cylinder (3) and a cold cylinder (4), with respective heat exchangers (9, 10), a solar device (20) for the collection and concentration of solar rays on a heat exchanger (23), and a fluid circuit (29) extending between the heat exchanger (23) of the solar device (20) and the heat exchanger (9) of the hot cylinder, **characterised in that** it comprises an absorption refrigeration apparatus (30) having an absorption stage (31) and a desorption stage (32) with respective heat exchangers (34, 36), and a fluid circuit (60) extended between the heat exchanger (34) of the absorption stage (31) and the heat exchanger (10) of the cold cylinder (6).

5. Assembly (1) according to claim 4, **characterised in that** it comprises a fluid circuit (72) expending between the heat exchanger (23) of the solar device (20) and the heat exchanger (36) of the desorption stage (32).

6. Assembly (1) according to claim 5, **characterised in that** it comprises a means (81) for detecting the temperature of hot fluid, of a thermostatic circuit (80) for limiting the maximum temperature of the hot fluid at a low preset value.

7. Assembly (1) according to claim 6, **characterised in that** the thermostatic circuit (80) is set at 400 °C.

8. Assembly (1) according to claim 1, **characterised in that** it comprises a storage tank (25) for the hot fluid along the fluid circuit (29).

## Patentansprüche

1. Verfahren zum Umwandeln von Sonnenstrahlung in mechanische Energie, insbesondere aber nicht ausschließlich zum Erzeugen elektrischer Energie, vom Typ, der den Schritt des Zuführens eines warmen Fluids zu einem warmen Zylinder eines Stirlingmotors aufweist, das von einer Solarvorrichtung erwärmt wird, **dadurch gekennzeichnet, dass** es den Schritt des Zuführens eines kalten Fluids zu einem kalten Zylinder des Stirlingmotors aufweist, das in der Absorptionsstufe einer Absorptionskühlvorrichtung gekühlt wird, wobei mechanische Energie von dem Stirlingmotor erhalten wird, insbesondere aber nicht ausschließlich zum Antreiben eines elektrischen Generators.

2. Verfahren nach Anspruch 1, **dadurch gekennzeichnet, dass** es den Schritt des Zuführens eines warmen Fluids, das von der Solarvorrichtung erwärmt worden ist, zu der Desorptionsstufe der Absorptionskühlvorrichtung aufweist.

3. Verfahren nach Anspruch 1 oder Anspruch 2, **dadurch gekennzeichnet, dass** es den Schritt des Aufrechterhaltens der Maximaltemperatur des warmen Fluids auf einem niedrigen vorgegeben Wert aufweist.

4. Vorrichtung (1) zum Umwandeln von Sonnenstrahlung in mechanische Energie, insbesondere aber nicht ausschließlich zum Erzeugen von elektrischer Energie, vom Typ, der einen Stirlingmotor (20), der einen warmen Zylinder (3) und einen kalten Zylinder (4) hat, mit jeweiligen Wärmetauschern (9, 10), eine Solarvorrichtung (2) für das Sammeln und Konzentrieren von Sonnenstrahlen auf einem Wärmetauscher (23), und einen Fluidkreislauf (29) aufweist, der sich zwischen dem Wärmetauscher (23) der Solarvorrichtung (20) und dem Wärmetauscher (9) des warmen Zylinders erstreckt, **dadurch gekennzeichnet, dass** sie eine Absorptionskühlvorrichtung (30), die eine Absorptionsstufe (31) und eine Desorptionsstufe (32) mit jeweiligen Wärmetauschern (34, 36) hat, und einen Fluidkreislauf (60) aufweist, der sich zwischen dem Wärmetauscher (34) der Absorptionsstufe (31) und dem Wärmetauscher (10) des kalten Zylinders (6) erstreckt.

5. Vorrichtung (1) nach Anspruch 4, **dadurch gekennzeichnet, dass** sie einen Fluidkreislauf (72) aufweist, der sich zwischen dem Wärmetauscher (23) der Solarvorrichtung (20) und dem Wärmetauscher (36) der Desorptionsstufe (32) erstreckt.

6. Vorrichtung (1) nach Anspruch 5, **dadurch gekennzeichnet, dass** sie eine Einrichtung (81), die die Temperatur des warmen Fluids detektiert, eines Thermostatschaltkreises (80) zum Begrenzen der Maximaltemperatur des warmen Fluids auf einen niedrigen vorgegeben Wert aufweist.

7. Vorrichtung (1) nach Anspruch 6, **dadurch gekennzeichnet, dass** der Thermostatschaltkreis (80) auf 400 °C gesetzt ist.

8. Vorrichtung (1) nach Anspruch 1, **dadurch gekennzeichnet, dass** sie einen Speichertank (25) für das warme Fluid entlang des Fluidkreislaufes (29) aufweist.

## Revendications

1. Procédé de conversion du rayonnement solaire en énergie mécanique, notamment mais non exclusivement pour générer de l'énergie électrique, du type comprenant l'étape d'injection dans un cylindre chaud d'un moteur Stirling d'un fluide chaud chauffé par un dispositif solaire, **caractérisé en ce qu'**il comprend en outre une étape d'injection dans un cylindre froid du moteur Stirling d'un fluide froid, refroidi par un étage d'absorption d'un appareil frigorifique à absorption, pour obtenir de l'énergie mécanique du moteur Stirling, notamment mais non exclusivement pour l'actionnement d'un générateur électrique.

2. Procédé selon la revendication 1, **caractérisé en ce qu'**il comprend une étape d'injection d'un fluide chaud, chauffé par le dispositif solaire, dans un étage de désorption d'un appareil frigorifique à absorption.

3. Procédé selon la revendication 1 ou 2, caractérisé en qu'il comprend une étape de maintien de la température maximale du fluide chaud à une valeur basse prédéterminée.

4. Ensemble (1) pour la conversion du rayonnement solaire en énergie mécanique, notamment mais non exclusivement pour générer de l'énergie électrique, du type comprenant un moteur Stirling (2) ayant un cylindre chaud (3) et un cylindre froid (4), et des échangeurs de chaleur respectifs (9,10), un dispositif solaire (20) pour la collecte et la concentration de rayons solaires sur un échangeur de chaleur (23), et un circuit de fluide (29) s'étendant entre l'échangeur de chaleur (23) du dispositif solaire (20) et l'échangeur de chaleur (9) du cylindre chaud, **caractérisé en ce qu'**il comprend un appareil frigorifique à absorption (30) ayant un étage d'absorption (31), un étage de désorption (32) et des échangeurs de chaleur respectifs (34, 36), et un circuit de fluide (60) s'étendant entre l'échangeur de chaleur (34) de l'étage d'absorption (31) et l'échangeur de chaleur (10) du cylindre froid (6).

5. Ensemble (1) selon la revendication 4, **caractérisé en ce qu'**il comprend un circuit de fluide (72) s'étendant entre l'échangeur de chaleur (23) du dispositif solaire (20) et l'échangeur de chaleur (36) de l'étage de désorption (32).

6. Ensemble (1) selon la revendication 5, **caractérisé en ce qu'**il comprend un moyen (81) de détection de la température du fluide chaud d'un circuit thermostatique (80) pour limiter la température maximale du fluide chaud à une valeur basse prédéterminée.

7. Ensemble (1) selon la revendication 6, **caractérisé en ce que** le circuit thermostatique (80) est fixé à 400°C.

8. Ensemble (1) selon la revendication 1, **caractérisé en ce qu'**il comprend un réservoir de stockage (25) pour le fluide chaud le long du circuit de fluide (29).
